# FASCICULE DE BREVET EUROPEEN

(11) **EP 1 427 957 B1**
(45) Date de publication et mention de la délivrance du brevet: **02.11.2005**
(21) Numéro de dépôt: 02796321.4
(22) Date de dépôt: 28.08.2002
(51) Int. Cl.: F16L 3/137

(54) **COLLIER DE SERRAGE MONOBLOC POUR LA FIXATION D'ORGANES TUBULAIRES**
EINSTÜCKIGE KLEMMVORRICHTUNG ZUR BEFESTIGUNG VON RÖHRENFÖRMIGEN GLIEDERN
SINGLE-PIECE CLAMPING DEVICE FOR FIXING TUBULAR MEMBERS

(30) Priorité: 29.08.2001 FR 0111204
(43) Date de publication de la demande: 16.06.2004
(73) Titulaire: Aliaxis R&D S.A.S., 78540 Vernouillet (FR)
(72) Inventeur: GUIBERT, Philippe, F-49450 Sainte Macaire en Mauges (FR); PICHON, Daniel, F-85290 Saint Laurent sur Sèvre (FR); PAUCOD, Jean-Michel, F-49280 La Seguinière (FR)
(74) Mandataire: Fosse, Danièle
(86) Numéro de dépôt international: PCT/FR2002/002955
(87) Numéro de publication internationale: WO 2003/019062

(56) Documents cités:
- FR-A- 2 036 233
- FR-A- 2 157 660
- FR-A- 2 597 168
- GB-A- 2 146 064

## Description

La présente invention concerne un collier de serrage monobloc pour la fixation d'un organe tubulaire, tel qu'un tube ou une conduite, du type comprenant une platine de fixation prolongée par une bande de matière synthétique semi-rigide élastiquement déformable, l'extrémité libre en forme de languette de ladite bande étant munie d'une denture coopérant avec une denture ménagée dans une creusure de la platine de fixation pour verrouiller le collier serré sur l'organe à fixer.

Un tel collier de serrage est par exemple connu par EP-A-0.079.417, mais présente l'inconvénient d'être en deux parties. Il n'exclut pas en outre un desserrage ou une ouverture accidentelle ou involontaire.

La présente invention a pour but de proposer un nouveau collier de serrage qui, tout en assurant un serrage et une fixation fiables, ne présente pas les inconvénients des colliers de serrage connus.

A cet effet, le collier de serrage selon l'invention est caractérisé en ce que ladite creusure présente une ouverture latérale et le collier de serrage comporte une fenêtre d'introduction d'un outil agissant sur le bord de la bande opposé à ladite ouverture latérale, la creusure et l'extrémité libre de la bande comportant respectivement une rainure et une nervure longitudinales coopérant entre elles lors du serrage du collier.

Avec le collier selon l'invention, la coopération de la nervure avec la rainure assure un excellent guidage de l'extrémité libre de la bande dans la creusure de la platine, alors que seule l'action d'un outil sur le bord de la bande permet une désolidarisation de la rainure et l'ouverture du collier par coulissement latéral relatif des deux dentures et le passage de l'extrémité de la bande à travers l'ouverture latérale de la creusure. Le collier ne peut donc pas être ouvert accidentellement tout en pouvant être ouvert au moyen d'un outil.

L'invention sera bien comprise à la lecture de la description suivante d'un exemple de réalisation, en référence au dessin annexé dans lequel :
- la figure 1 est une vue schématique en élévation latérale d'un collier monté serré,
- la figure 2 est une vue schématique en coupe longitudinale du collier de la figure 1 ouvert,
- la figure 3 est une vue schématique en élévation frontale du collier,
- la figure 4 est une vue schématique en perspective d'une portion d'extrémité de la bande du collier de la figure 1 et
- la figure 5 est une vue schématique en coupe transversale de la portion de coopération des extrémités du collier en position de serrage.

Le collier 1 de serrage est constitué par une bande 2 en matière thermoplastique rigide élastiquement déformable, telle que du PVC, du polypropylène ou de l'ABS, moulée par injection. Le collier 1 est, dans l'exemple décrit et représenté, de forme générale quadrangulaire. Il est, dans l'exemple représenté, adapté au maintien d'un tuyau de descente d'eaux pluviales.

Une première extrémité 3 de la bande 2 comprend une surépaisseur formant une platine de fixation 4 percée d'un alésage de fixation 5 radial. Dans cette platine de fixation 4 est ménagée une creusure 6 en forme de fente, longitudinale par rapport à l'ensemble de la bande 2, dont la face adjacente à l'intérieur 7 du collier 1 porte une première denture 8. La face de la creusure 6 tournée vers l'extérieur du collier 1 est munie d'une rainure 9 longitudinale.

L'extrémité libre 10 de la bande 2 est en forme de languette 11 agencée et dimensionnée pour coopérer avec la creusure 6 de la première extrémité 3. A cet effet, la languette 11 présente, sur sa face tournée vers l'intérieur 7 du collier, une seconde denture 12 et, sur sa face dirigée vers l'extérieur du collier 1, une nervure 13. La languette 11 comporte en outre un doigt 14 servant à pousser la languette 11 dans la creusure 6.

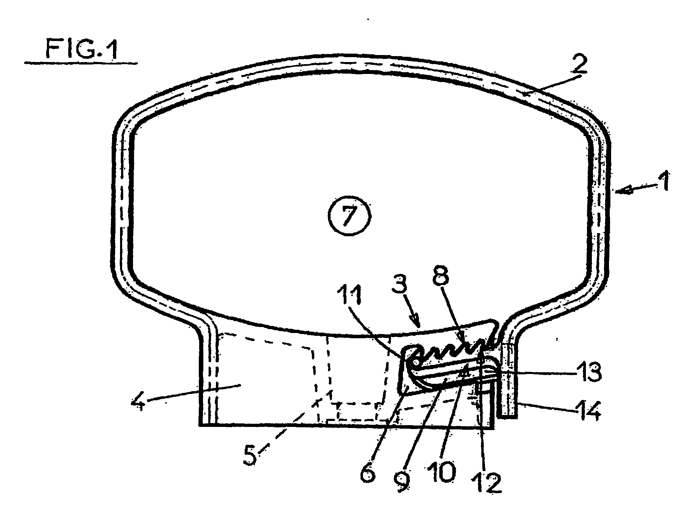

Lorsque le collier 1 est serré autour d'un organe tubulaire (non représenté) de forme correspondante, les première et seconde dentures 8 et 12 (figures 1 et 5) sont en prise l'une dans l'autre et le collier 1 ne peut pas être ouvert par un mouvement inverse du fait de la contrainte exercée par le serrage de l'organe tubulaire. Au cours de l'enfoncement de la languette 11 dans la creusure 6, la nervure 13 de la languette 6 a coulissé dans la rainure 9, ce qui assure un excellent guidage. Dans la position de verrouillage des figures 1 et 5, la nervure 13 reste légèrement engagée dans la rainure 9.

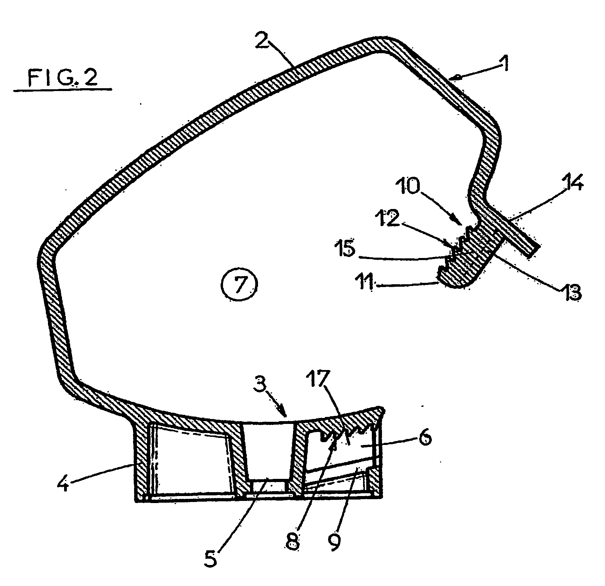

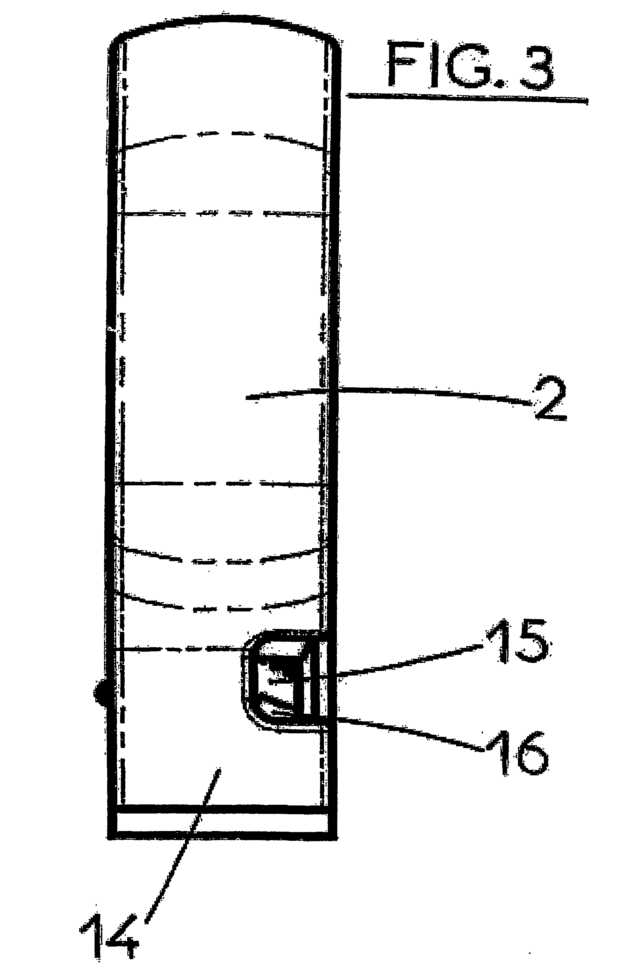

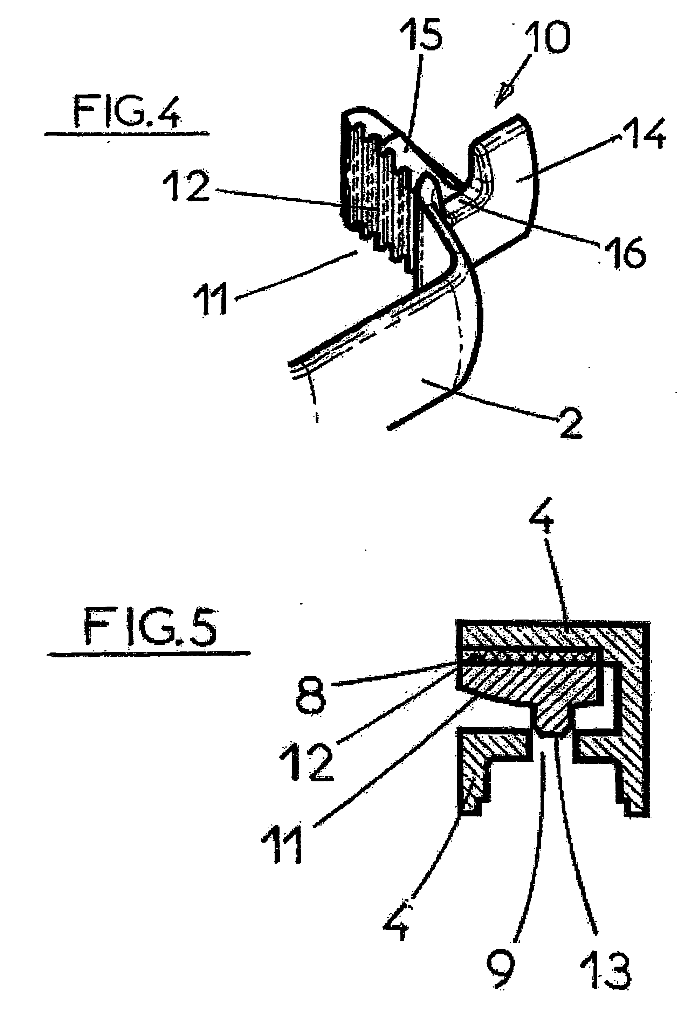

L'invention prévoit en outre que la languette 11 comporte, sur un bord, une rampe 15 latérale prolongée par une fenêtre d'introduction 16 (voir figures 3 et 4). De plus, et comme représenté sur la figure 2, la creusure 6 comporte une ouverture latérale 17 sur la face axiale écartée de la rampe 15 en position de montage.

En conséquence, l'introduction d'un outil (non représenté) dans l'encoche 16 et la poussée de cet outil sur la rampe 15 applique sur la languette 11 une composante de poussée latérale telle que la nervure 13 sort à force de la rainure 9 et que la denture 12 glisse latéralement sur la denture 8, ce qui permet d'ouvrir le collier. Afin de rendre plus ou moins dure la sortie de la nervure 13 de la rainure 9, on combine la hauteur de pénétration de ces deux éléments avec un bord chanfreiné ou arrondi ménagé aux extrémités des dites nervure et/ou rainure.

L'invention peut être réalisée avec des variantes, en particulier en ce qui concerne les moyens d'ouverture du collier. En effet, au lieu de prévoir une rampe 15 sur un côté de la bande 2, il est possible que la bande 2 reste à bords parallèles à son extrémité libre et de prévoir un accès, par exemple une fenêtre latérale, opposée à l'ouverture latérale 17, dans la creusure 6, pour un outil exerçant directement une poussée latérale sur le bord de l'extrémité libre 10 de la bande 2.

## Revendications

1. Collier (1) de serrage monobloc pour la fixation d'un organe tubulaire, tel qu'un tube ou une conduite, du type comprenant une platine de fixation (4) prolongée par une bande (2) de matière synthétique semi-rigide élastiquement déformable, l'extrémité (10) libre en forme de languette (11) de ladite bande (2) étant munie d'une denture (12) coopérant avec une denture (8) ménagée dans une creusure (6) de la platine de fixation (4) pour verrouiller le collier (1) serré sur l'organe à fixer,
**caractérisé en ce que** ladite creusure (6) comporte une ouverture (17) latérale et le collier (1) de serrage comporte une fenêtre (16) d'introduction d'un outil agissant sur le bord de la bande (2) opposé à ladite ouverture (17) latérale, la creusure (6) et l'extrémité (10) libre de la bande (2) comportant respectivement une rainure (9) et une nervure (13) longitudinales coopérant entre elles lors du serrage du collier (1).

2. Collier (1) de serrage selon la revendication 1,
**caractérisé en ce que** la nervure (13) et/ou la rainure (9) comportent au moins un bord chanfreiné ou arrondi ménagé à leurs extrémités.

3. Collier (1) de serrage selon l'une des revendications 1 et 2,
**caractérisé en ce que** la fenêtre (16) d'introduction d'un outil agissant sur le bord de la bande (2) est ménagée dans l'extrémité libre de la bande (2) en regard d'une rampe (15) formée dans ledit bord.

4. Collier (1) de serrage selon l'une des revendications 1 et 2,
**caractérisé en ce que** la fenêtre d'introduction d'un outil agissant sur le bord de la bande (2) est ménagée dans la face de la creusure (6) opposée à l'ouverture (17) latérale.

5. Collier (1) de serrage selon l'une des revendications 1 à 4,
**caractérisé en ce que** l'extrémité (10) libre en forme de languette (11) de la bande (2) comporte un doigt (14) de poussée.

6. Collier (1) de serrage selon l'une des revendications 1 à 5,
**caractérisé en ce que** la bande (2) est en matière thermoplastique, telle que du PVC, de l'ABS ou du polypropylène, moulée par injection.

## Patentansprüche

1. Einstückige Klemmvorrichtung (1) zur Befestigung eines rohrförmigen Gliedes, beispielsweise eines Rohres oder einer Leitung, mit einer Befestigungsplattee (4), die durch einen Streifen (2) aus elastisch verformbarem, halbstarrem Kunststoff verlängert ist, wobei das als Lasche (11) ausgeformte freie Ende (10) des genannten Streifens (2) mit einer Zahnung (12) versehen ist, die mit einer Verzahnung (8) zusammenwirkt, die in einer Höhlung (6) der Befestigungsplatte (4) ausgebildet ist, um die auf dem zu befestigenden Glied gespannte Vorrichtung zu verriegeln, **dadurch gekennzeichnet, dass** die genannte Höhlung (6) eine seitliche Öffnung (17) aufweist und die Klemmvorrichtung (1) ein Fenster (16) zur Einführung eines Werkzeugs aufweist, welches auf den Rand des der genannten seitlichen Öffnung (17) entgegengesetzten Streifens (2) einwirkt, wobei die Höhlung (6) und das freie Ende (10) des Streifens (2) eine Längsnut (9) beziehungsweise eine Längsrippe (13) aufweisen, die beim Spannen der Vorrichtung (1) zusammenwirken.

2. Klemmvorrichtung (1) nach Anspruch 1, **dadurch gekennzeichnet, dass** die Rippe (13) und/oder die Nut (9) mindestens einen an deren Enden ausgebildeten abgeschrägten oder abgerundeten Rand aufweisen bzw. aufweist.

3. Klemmvorrichtung (1) nach einem der Ansprüche 1 und 2, **dadurch gekennzeichnet, dass** das Fenster (16) zur Einführung eines auf den Rand des Streifens (2) einwirkenden Werkzeugs in dem freien Ende des Streifens (2) gegenüber einer in dem genannten Rand gebildeten Rampe (15) ausgebildet ist.

4. Klemmvorrichtung (1) nach einem der Ansprüche 1 und 2, **dadurch gekennzeichnet, dass** das Fenster zur Einführung eines auf den Rand des Streifens (2) einwirkenden Werkzeugs in der Fläche der Höhlung (6) ausgebildet ist, die der seitlichen Öffnung (17) gegenüberliegt.

5. Klemmvorrichtung (1) nach einem der Ansprüche 1 bis 4, **dadurch gekennzeichnet, dass** das als Lasche (11) ausgeformte freie Ende (10) des Streifens (2) einen Druckfinger (14) aufweist.

6. Klemmvorrichtung (1) nach einem der Ansprüche 1 bis 5, **dadurch gekennzeichnet, dass** der Streifen (2) aus einem thermoplastischen Stoff, beispielsweise PVC, ABS oder Polypropylen, besteht, der spritzgegossen ist.

## Claims

1. One-piece clamping collar (1) for holding a tubular component, such as a pipe or conduit, said collar being of the type comprising a holding platen (4) which is prolonged by a strip (2) of elastically deformable, semi-rigid synthetic material, the free end (10) of the said strip (2), which free end is in the form of a tongue (11), being provided with a tooth system (12) which cooperates with a tooth system (8) arranged in a recess (6) in the holding platen (4) in order to lock the collar (1) which has been clamped onto the component to be fixed,
**characterised in that** the said recess (6) has a lateral opening (17) and the clamping collar (1) has a window (16) for the introduction of a tool which acts on that edge of the strip (2) which is opposite the said lateral opening (17), the recess (6) and the free end (10) of the strip (2) having, respectively, a longitudinal groove (9) and a longitudinal rib (13) which cooperate with each another when the collar (1) is tightened (1).

2. Clamping collar (1) according to claim 1,
**characterised in that** the rib (13) and/or the groove (9) have at least one chamfered or rounded edge arranged at their ends.

3. Clamping collar (1) according to one of claims 1 and 2,
**characterised in that** the window (16) for the introduction of a tool which acts on the edge of the strip (2) is arranged in the free end of the strip (2), facing a ramp (15) formed in the said edge.

4. Clamping collar (1) according to one of claims 1 and 2,
**characterised in that** the window for the introduction of a tool which acts on the edge of the strip (2) is arranged **in that** face of the recess (6) which is opposite the lateral opening (17).

5. Clamping collar (1) according to one of claims 1 to 4,
**characterised in that** the free end (10) of the strip (2), which free end is in the form of a tongue (11), has a pushing finger (14).

6. Clamping collar (1) according to one of claims 1 to 5,
**characterised in that** the strip (2) is made of injection-moulded thermoplastic material, such as PVC, ABS or polypropylene.
